(19) **Europäisches Patentamt / European Patent Office / Office européen des brevets**

(11) **EP 3 949 629 B1**

(12) **EUROPEAN PATENT SPECIFICATION**

(45) Date of publication and mention
of the grant of the patent:
**17.09.2025  Bulletin 2025/38**

(21) Application number: **20781898.0**

(22) Date of filing: **18.03.2020**

(51) International Patent Classification (IPC):
**H04W 72/12** *(2023.01)*     **H04W 72/566** *(2023.01)*
**H04W 88/02** *(2009.01)*     **H04W 24/02** *(2009.01)*

(52) Cooperative Patent Classification (CPC):
**H04W 72/1268; H04W 72/569;** H04W 24/02;
H04W 88/02

(86) International application number:
**PCT/FI2020/050169**

(87) International publication number:
**WO 2020/201618 (08.10.2020 Gazette 2020/41)**

(54) **INTRA-UE MULTIPLEXING IN 5G WIRELESS NETWORKS**

MULTIPLEXING INNERHALB EINES BENUTZERGERÄTS IN DRAHTLOSEN 5G-NETZWERKEN

MULTIPLEXAGE INTRA-UE DANS DES RÉSEAUX SANS FIL 5G

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **01.04.2019  US 201962827307 P**

(43) Date of publication of application:
**09.02.2022  Bulletin 2022/06**

(73) Proprietor: **Nokia Technologies Oy
02610 Espoo (FI)**

(72) Inventors:
• **LI, Zexian
  02610 Espoo (FI)**
• **HUGL, Klaus
  1070 Vienna (AT)**
• **DEGHEL, Matha
  75014 Paris (FR)**
• **YE, Sigen
  Whitehouse Station, New Jersey 08889 (US)**

(74) Representative: **Mudge, Kevin
  Bryers Intellectual Property Ltd
  Bristol & Bath Science Park
  Dirac Crescent
  Emersons Green
  Bristol BS16 7FR (GB)**

(56) References cited:
EP-A1- 2 515 489      WO-A1-2018/172382
WO-A1-2018/222104      WO-A1-2020/063677
US-A1- 2016 174 238      US-A1- 2018 176 937
US-A1- 2018 184 440      US-A1- 2019 159 155
US-B2- 9 867 137

• NOKIA ET AL: "Summary of Friday offline
  discussion on UL/DL intra-UE prioritization/
  multiplexing", 5 March 2019 (2019-03-05), pages
  1 - 29, XP051687664, Retrieved from the Internet
  <URL:http://www.3gpp.org/ftp/tsg%5Fran/WG1%
  5FRL1/TSGR1%5F96/Docs/R1%2D1903818%
  2Ezip> [retrieved on 20190306]

**Description**

**TECHNICAL FIELD**

One or more example embodiments relate to Third Generation Partnership Project (3GPP) New Radio (NR) systems.

**BACKGROUND**

Fifth generation (5G) wireless communications networks are the next generation of mobile communications networks. Standards for 5G communications networks are currently being developed by the Third Generation Partnership Project (3GPP). These standards are known as 3GPP New Radio (NR) standards. WO2011/024131A2 relates to radio link control (RLC) protocols for wireless communication networks and discloses methods and apparatuses for interrupting and resuming transmissions on an RLC data block basis for different priority packet flows within a single RLC entity. WO2018/222104A1 relates to wireless communications and discloses code block aware slot transmission preemption. R1-1903818, is a summary of standardization discussion on UL/DL intra-UE prioritization/multiplexing.

**SUMMARY**

The invention is set out in the appended set of claims. The invention relates to Third Generation Partnership Project (3GPP) New Radio (NR) systems, and more particularly to intra-user equipment (UE) prioritization and/or multiplexing in Industrial Internet-of-Things (IoT) environments or for support of Ultra-Reliable and Low Latency Communication (URLLC).

The invention considers a situation in which a wireless resource conflict occurs between higher priority traffic (e.g., Ultra-Reliable and Low Latency Communication (URLLC)) traffic) and lower priority traffic (e.g., enhanced Mobile Broadband (eMBB) traffic), and provides a mechanism for handling the transmission and allocation of wireless resources (e.g., Physical Uplink Shared CHannel (PUSCH) resources) for lower priority traffic, which are impacted by transmissions of higher priority traffic. The embodiments provide mechanisms for handling lower priority data transmissions on the uplink (e.g., lower priority PUSCH transmissions), which are impacted by higher priority data transmissions on the uplink (e.g., higher priority PUSCH transmissions) as a result of, for example, when dynamic grant resources and configured grant resources overlap, or configured grant resources overlap with configured grant resources, or dynamic grant resources overlap with dynamic grant resources.

The embodiments provide uplink (UL) and/or downlink (DL) intra-UE prioritization and/or multiplexing mechanisms in which different categories of traffic may be prioritized at the UE. The embodiments may be applicable to data and/or control channels and may consider different latency and reliability requirements and/or different types of resource allocation, such as grant-free (also referred to as configured grant) and dynamic grant-based allocations.

The embodiments may more efficiently support applications and services from verticals (e.g., in the industrial Internet-of-Things (IoT) domain).

The embodiments may also improve and/or optimize handling of transmission and/or resources allocated for impacted lower priority traffic.

**BRIEF DESCRIPTION OF THE DRAWINGS**

Example embodiments will become more fully understood from the detailed description given herein below and the accompanying drawings, wherein like elements are represented by like reference numerals, which are given by way of illustration only and thus are not limiting of this disclosure.

FIG. 1 illustrates a simplified diagram of a portion of a Third Generation Partnership Project (3GPP) New Radio (NR) access deployment for explaining example embodiments.

FIG. 2 is a graph of frequency versus time illustrating an example uplink wireless resource conflict.

FIG. 3 illustrates an example embodiment in which a remaining portion of a coded block of lower priority data is transmitted on the remaining portion of the wireless resource allocated for transmitting the lower priority data.

FIG. 4 illustrates an example embodiment in which the coded block of lower priority data is retransmitted on the remaining portion of the wireless resource allocated for transmitting the lower priority data.

FIG. 5 illustrates another example embodiment in which the coded block of lower priority data is retransmitted on the remaining portion of the wireless resource allocated for transmitting the lower priority data.

FIG. 6 is a flow chart illustrating a method according to example embodiments.

FIG. 7 is a flow chart illustrating another method according to example embodiments.

FIG. 8 is a flow chart illustrating another method according to example embodiments.

FIG. 9 is a block diagram illustrating an example embodiment of a user equipment (UE).

## DETAILED DESCRIPTION

Various example embodiments will now be described more fully with reference to the accompanying drawings in which some example embodiments are shown.

Detailed illustrative embodiments are disclosed herein. However, specific structural and functional details disclosed herein are merely representative for purposes of describing example embodiments. The example embodiments may, however, be embodied in many alternate forms and should not be construed as limited to only the embodiments set forth herein.

It should be understood that there is no intent to limit example embodiments to the particular forms disclosed. Like numbers refer to like elements throughout the description of the figures.

While one or more example embodiments may be described from the perspective of radio network elements (e.g., gNB), user equipment (UE), or the like, it should be understood that one or more example embodiments discussed herein may be performed by the one or more processors (or processing circuitry) at the applicable device. For example, according to one or more example embodiments, at least one memory may include or store computer program code, and the at least one memory and the computer program code may be configured to, with at least one processor, cause a UE (or radio network element) to perform the operations discussed herein.

Although one or more example embodiments may be discussed with regard to enhanced-Mobile Broadband (eMBB) data/traffic as lower (or low) priority data (or traffic) and Ultra-Reliable and Low Latency Communication (URLLC) data/traffic as higher (or high) priority data (or traffic), example embodiments should not be limited to these examples. In other instances, for example, lower priority traffic may be URLLC traffic with relaxed latency and/or reliability requirements.

Although example embodiments may be discussed with regard to data channels or transmissions and uplink wireless resources, it should be understood that example embodiments may also be applicable to control channels or transmissions and/or downlink wireless resources.

It will be appreciated that a number of example embodiments may be used in combination.

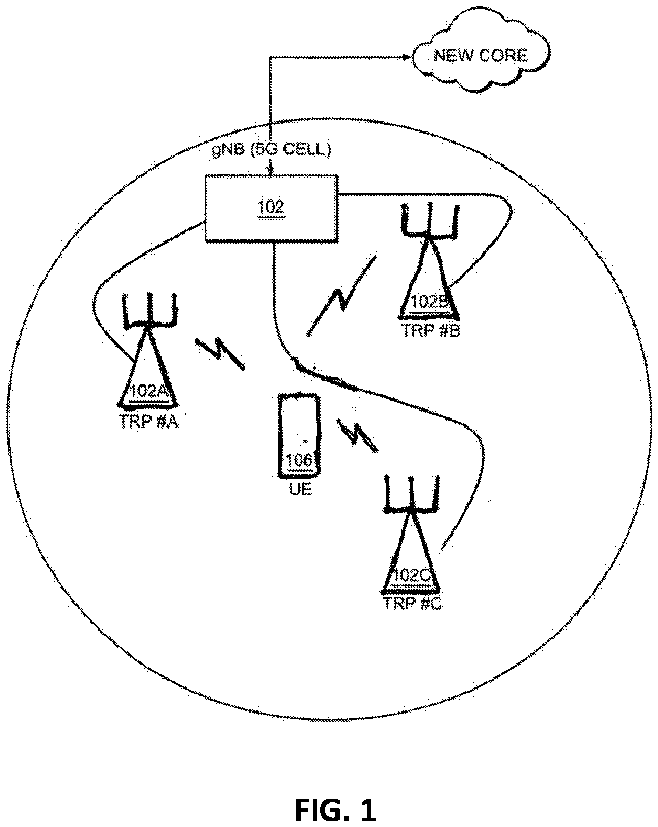

FIG. 1 illustrates a simplified diagram of a portion of a 3GPP NR access deployment for explaining example embodiments.

Referring to FIG. 1, the 3GPP NR radio access deployment includes a gNB (also referred to as a base station) 102 having transmission and reception points (TRPs) 102A, 102B, 102C. Each TRP 102A, 102B, 102C may be, for example, a remote radio head (RRH) or remote radio unit (RRU) including at least, for example, a radio frequency (RF) antenna (or antennas) or antenna panels, and a radio transceiver, for transmitting and receiving data within a geographical area. In this regard, the TRPs 102A, 102B, 102C provide wireless resources for UEs within a geographical coverage area. In some cases, baseband processing may be divided between the TRPs 102A, 102B, 102C and gNB 102 in a 5th Generation (5G) cell. Alternatively, the baseband processing may be performed at the gNB 102. In the example shown in FIG. 1, the TRPs 102A, 102B, 102C are configured to communicate with UEs (e.g., UE 106) via one or more transmit (TX)/receive (RX) beam pairs. The gNB 102 communicates with the core network, which is referred to as the New Core in 3GPP NR.

The TRPs 102A, 102B, 102C may have independent schedulers, or the gNB 102 may perform joint scheduling among the TRPs 102A, 102B, 102C.

Although only a single UE 106 is shown in FIG. 1, the gNB 102 and TRPs 102A, 102B, 102C may provide communication services to a relatively large number of UEs within the coverage area of the TRPs 102A, 102B, 102C. For the sake of clarity of example embodiments, communication services (including transmitting and receiving wireless signals) will be discussed as between the gNB 102 and the UE 106. It should be understood, however, that signals may be transmitted between the UE 106 and one or more of the TRPs 102A, 102B, 102C.

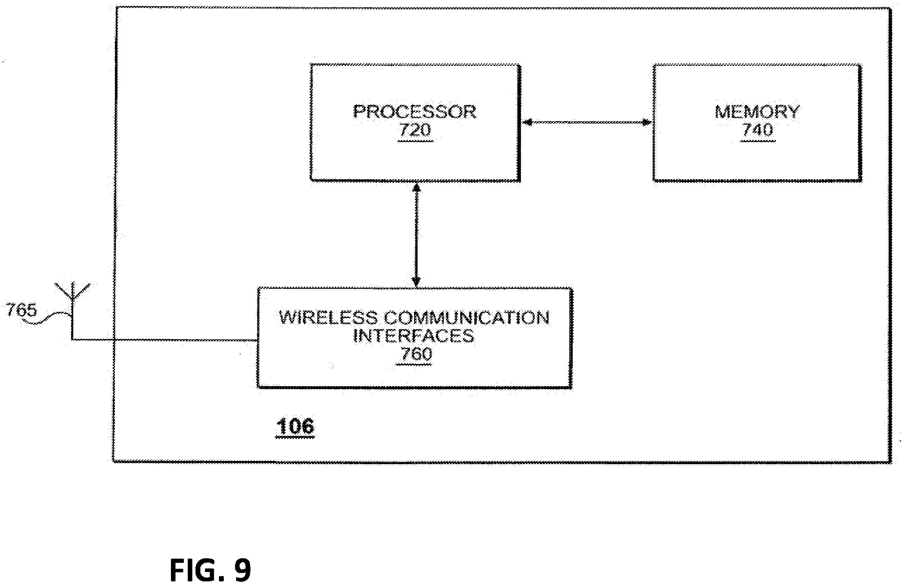

The UE 106 is a device used by an end-user to communicate via the 3GPP NR radio access deployment shown in FIG. 1. An example embodiment of the UE 106 will be discussed in more detail later with regard to FIG. 9. Examples of UEs include cellular phones, smartphones, tablets, computers, laptop computers, or the like.

One or more example embodiments provide mechanisms for handling impacted lower priority data (e.g., eMBB traffic) when the lower priority data is affected due to a wireless resource conflict in time (in the time domain) between higher priority data (e.g., URLLC) and the lower priority data. As discussed herein, lower priority data may also be referred to as lower priority traffic, and higher priority data may also be referred to as higher priority traffic.

With regard to FIG. 1, an example of a resource conflict is a case where a configured grant (CG) resource for transmission of higher priority data from the UE 106 to gNB 102 on the Physical Uplink Shared Channel (PUSCH) overlaps with a dynamic grant (DG) resource for transmission of lower priority data from the UE 106 to the gNB 102 on the PUSCH in the time domain. In this example scenario, one or more example embodiments provide mechanisms for prioritizing the configured grant resource for transmitting the higher priority data over the dynamic grant resource for transmitting the lower priority data, and the handling of the remaining portion of the dynamic grant resource (if any) and/or the impacted lower priority data after transmission of the higher priority data on the configured grant resource.

Although example embodiments may be described with regard to wireless resource conflicts in time between dynamic grant resources and configured grant resources, example embodiments should not be limited to these examples. Rather, example embodiments discussed herein may be applicable to other scenarios; for example, example embodiments may be applicable in situations in which separate configured grant resources (or other grant resources) conflict, or dynamic grant resources conflict. As discussed herein, dynamic grant resources and configured grant resources may be more generally referred to respectively as first wireless resources, second wireless resources, third wireless resources, etc.

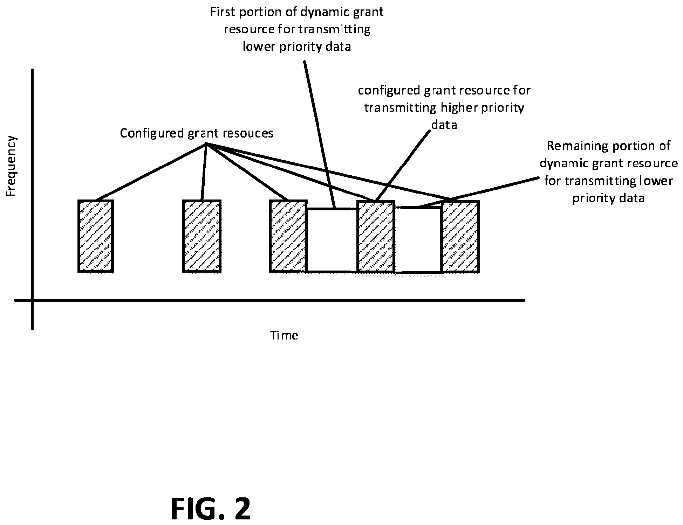

FIG. 2 is a graph of frequency versus time illustrating an example in which a configured grant resource overlaps with a dynamic grant resource on the PUSCH in the time domain. For example purposes, this example graph shows a case where the resources overlap also in the frequency domain. However, example embodiments should not be limited to this example. Rather, example embodiments may also be applicable to cases where the resources do not overlap in the frequency domain while the UE 106 is not capable of transmitting more than one PUSCH simultaneously.

In the scenario shown in FIG. 2, the configured grant resource for transmitting higher priority data takes priority over the dynamic grant resource for transmitting lower priority data. As mentioned similarly above, one or more example embodiments provide mechanisms for handling the remaining portion of the dynamic grant resource and/or the impacted lower priority data on the PUSCH (e.g., whether to resume transmission of some or all of the lower priority data on the remaining portion of the dynamic grant resource, wait for a new dynamic grant to retransmit the lower priority data, etc.).

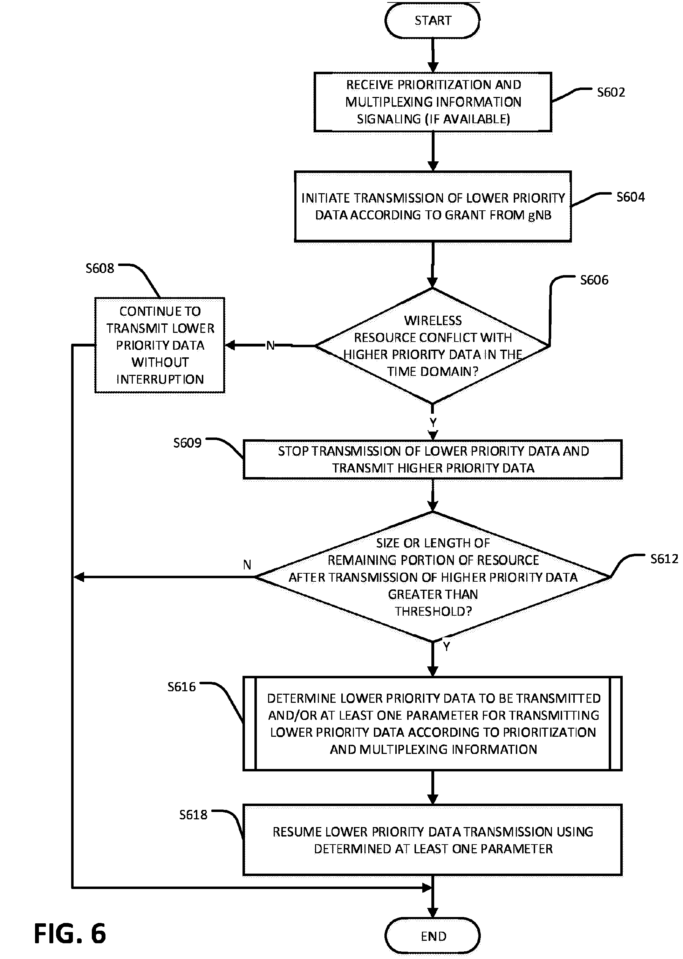

FIG. 6 is a flow chart illustrating a method for transmitting data according to example embodiments. For example purposes, the example embodiment shown in FIG. 6 will be discussed with regard to the 3GPP NR access deployment shown in FIG. 1. Moreover, for example purposes, the example embodiment shown in FIG. 6 will be discussed with regard a conflict between a dynamic grant resource for transmitting lower priority data and a configured grant resource for transmitting higher priority data. However, example embodiments should not be limited to this example.

Referring to FIG. 6, at step S602, the UE 106 receives prioritization and multiplexing information signaling from the gNB 102. Such signaling information may be received through higher layer signaling, such as through a Radio Resource Control (RRC) signaling message. The prioritization and multiplexing information signaling may include one or more intra-UE prioritization/multiplexing rules. An intra-UE prioritization/multiplexing rule specifies how the UE 106 is to handle transmission of a coded block of lower priority data (also referred to as a data block of lower priority data or a block of lower priority data) in the event of a wireless resource conflict, such as a conflict between a configured grant resource and a dynamic grant resource on the PUSCH as discussed above. Intra-UE prioritization /multiplexing rules according to one or more example embodiments will be discussed in more detail below.

In at least one example embodiment, the gNB 102 may configure and/or define the intra-UE prioritization/multiplexing rules for the UE 106 to handle the impacted lower priority data transmission and the manner in which to utilize the remaining portion of the dynamic grant resource after transmitting the higher priority data. One or more example embodiments may aim to deliver all coded bits of a coded block of lower priority data scheduled for transmission to the gNB 102, rather than allowing higher priority data to puncture some of the coded bits of the coded block of lower priority data.

Although not shown in FIG. 6, according to at least some example embodiments, the prioritization and multiplexing information and intra-UE prioritization/multiplexing rules for the UE 106 may be pre-defined in the standards. In this case, signaling from the gNB 102 may not be necessary and step S602 may be omitted.

At step S604, the UE 106 initiates transmission of the coded block of lower priority data on the scheduled dynamic grant resource (according to a dynamic grant from the gNB 102). The dynamic grant resource may be scheduled by the gNB 102 and the gNB 102 may provide the scheduling information to the UE 106.

At step S606, the UE 106 determines whether a wireless resource conflict with transmission of higher priority data has occurred in the time domain. In one example, the UE 106 may determine whether a wireless resource conflict has occurred between the dynamic grant resource for transmitting the coded block of lower priority data and a configured grant resource for transmitting a coded block of higher priority data in the time domain. In this example, the UE 106 determines that a wireless resource conflict has occurred if the configured grant resource overlaps with at least a portion of the dynamic grant resource in the time domain.

If a wireless resource conflict between the dynamic grant resource and the configured grant resource in the time domain has not been determined (or alternatively detected), then the UE 106 continues to transmit coded bits of the coded block of lower priority data without interruption at step S608 until all coded bits of the coded block of lower priority data are transmitted on the dynamic grant resource. The process then terminates.

Returning to step S606, if the UE 106 detects a wireless resource conflict with higher priority data in the time domain, then at step S609 the UE 106 interrupts (or stops) transmission of the coded block of lower priority data and transmits the higher priority data on the configured grant resource.

After transmission of the higher priority data on the configured grant resource, at step S612 the UE 106 determines whether the size or length of the remaining portion of the dynamic grant resource after transmission of the higher priority data on the configured grant resource is greater than a threshold value. In at least one example embodiment, the size or length of the remaining portion of the dynamic grant resource may be the number of remaining Orthogonal Frequency-Division Multiplexing (OFDM) symbols of the dynamic grant resource.

According to one or more example embodiments, the threshold value may be set by a network operator based on empirical data and/or implementation, and the threshold value may be signaled by the gNB 102 to the UE 106, for example, as part of the prioritization and multiplexing information signaling at step S602 (or, alternatively, given, or pre-defined). In at least one example, the threshold value may be one OFDM symbol, since in the case with two OFDM symbols, at least one OFDM symbol is available for transmission of coded bits of lower priority data (the DM-RS takes the other OFDM symbol in this example case).

If the UE 106 determines that the size or length of the remaining portion of the dynamic grant resource is less than or equal to the threshold value, then the UE 106 determines that transmission of the lower priority data cannot be completed on the dynamic grant resource. In this case, the UE 106 may report a Hybrid Automatic Repeat Request-Negative Acknowledgement (HARQ-NACK) to the upper layers and the process terminates.

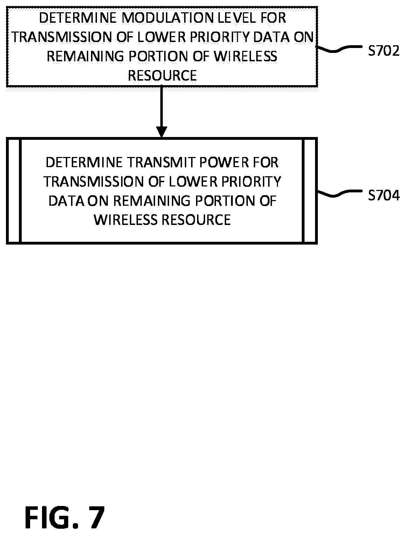

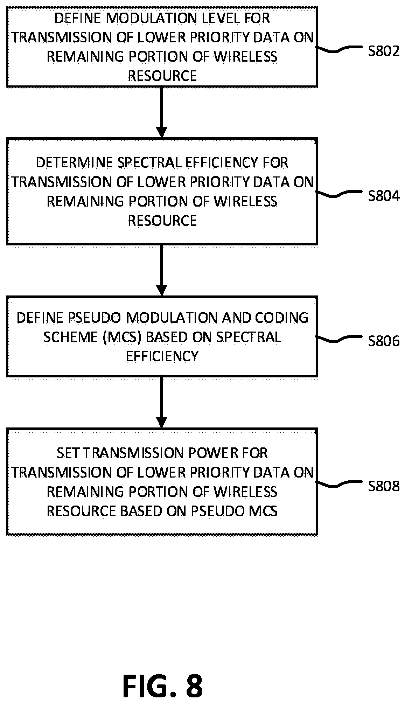

Returning to step S612, if the size or length of the remaining portion of the dynamic grant resource after transmission of the higher priority data is greater than the threshold value, then at step S616 the UE 106 determines one or more of (i) the amount of the coded block of lower priority data to be transmitted or (ii) at least one parameter for transmission of lower priority data on the remaining portion of the dynamic grant resource according to the prioritization and multiplexing information signaling received from the gNB 102 at step S602. According to at least one example embodiment, in determining the amount of the coded block of lower priority data to be transmitted, the UE 106 may determine whether to transmit only a remaining portion of the coded block of lower priority data or to again transmit the entire coded block of lower priority data on the remaining portion of the dynamic grant resource. The at least one parameter may include one or more of a modulation level (number of bits per modulation symbol) or transmission power for transmitting lower priority data on the remaining portion of the dynamic grant resource. Step S616 will be discussed in more detail later with regard to FIGS. 7 and 8.

At step S618, the UE 106 maps the lower priority data (determined at step S616) to be transmitted (e.g., after a bit selection procedure with the input from circular buffer) onto the remaining portion of the dynamic grant resource, and transmits the lower priority data to the gNB 102.

Although not shown in FIG. 6, after transmission of the higher priority data on the configured grant resource at step S609 and prior to the determination at step S612, the UE 106 may determine whether a new dynamic grant resource has been allocated by the gNB 102 (e.g., a new dynamic grant of wireless resources has been received from the gNB 102) for retransmitting the coded block of lower priority data.

In this case, if a new dynamic grant resource has been allocated for retransmission of the coded block of lower priority data, then the UE 106 may initiate retransmission of the coded block of lower priority data on the newly allocated dynamic grant resource and the process may return to step S604 and repeat for the new dynamic grant resource. If a new dynamic grant resource is not allocated by the gNB 102, then the process may continue to step S612.

As mentioned above, the prioritization and multiplexing information may include one or more intra-UE prioritization/multiplexing rules. According to at least some example embodiments, the intra-UE prioritization/multiplexing rules may specify a plurality of different options for resuming transmission of the lower priority data on the remaining portion of the dynamic grant resource. In this regard, the intra-UE prioritization/multiplexing rules may specify the lower priority data (e.g., an amount of the coded block of lower priority data) to be transmitted on the remaining portion of the dynamic grant resource and/or a manner in which to transmit the lower priority data (e.g., the at least one parameter to be determined and how to determine said parameter). Examples of the plurality of different options will be discussed in more detail below.

In one example, the intra-UE prioritization/multiplexing rule from the gNB 102 may instruct and/or configure the UE 106 to utilize one of the plurality of different options to be used when a wireless resource conflict with higher priority data is detected (step S606). In another example, the intra-UE prioritization/multiplexing rule from the gNB 102 may instruct and/or configure the UE 106 with a plurality of different options, and the UE 106 may select one of the options upon detecting a wireless resource conflict with higher priority data. The UE 106 may select from among the plurality of different options according to, for example, the ratio of the size of the used portion of the dynamic grant resource to the overall size of the dynamic grant resource (denoted as u) and the ratio of the size of the remaining portion of the dynamic grant resource to the overall size of the dynamic grant resource (denoted as r). If the values (two ratios) are relatively close to each other, then the UE 106 may default to one of the configured options (e.g., a first option in which a remaining portion of the coded block of lower priority data is transmitted), whereas if the ratio $u \ll r$, then the UE 106 may select another option (e.g., a second option in which the entire coded block of lower priority data is retransmitted). Which option is to be used in a specific scenario may also be configured by the gNB 102 and identified in the prioritization and multiplexing information from the gNB 102. It should be understood that these are examples, and example embodiments should not be limited thereto.

Example options to be used when a wireless resource conflict with higher priority data is detected will now be described in more detail.

In a first option, the UE 106 may resume transmission of the remaining (non-transmitted) coded bits of the coded block of lower priority data on the remaining portion of the dynamic grant resource, while adjusting the modulation level and/or transmission power for transmitting the lower priority data. In this case, depending on the length of the impacted dynamic grant resource, the Modulation and Coding Scheme (MCS) for the transmission of lower priority data and the allocated dynamic grant resource, the modulation level may be the same as the initial modulation level used to initially transmit the lower priority data on the dynamic grant resource. If no DeModulation Reference Signal (DM-RS) is present in the remaining portion of the dynamic grant resource, then the UE 106 may insert an additional DM-RS such that the gNB 102 may proceed with demodulation of the lower priority data according to different modulation schemes. After demodulation, the gNB 102 may decode and recover the lower priority data in any suitable, well-known manner.

The transmission power may be adjusted to increase the probability of successful decoding of the transmitted lower priority data at the gNB 102. Example embodiments of methods for adjusting modulation level and/or transmission power will be discussed in more detail later with regard to FIGS. 7 and 8.

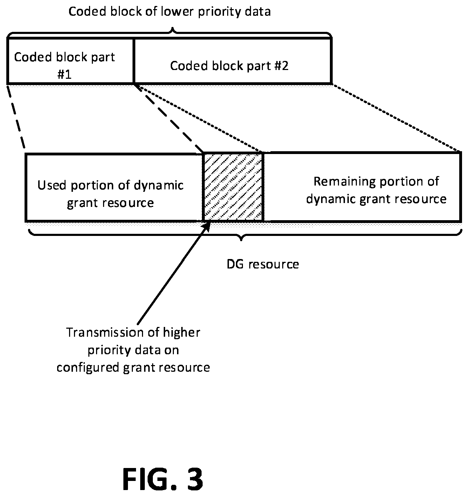

FIG. 3 illustrates an example embodiment of the first option discussed above; that is, an example embodiment in which a remaining portion of a coded block of lower priority data is transmitted on the remaining portion of the dynamic grant resource.

As shown in FIG. 3, a first portion of the coded block of lower priority data (Coded block part #1) is sent before a higher priority data transmission on the configured grant resource, and the remaining (non-transmitted) portion of the coded block of lower priority data (Coded block part #2) is mapped to the remaining portion of the dynamic grant resource after transmission of the higher priority data. The UE 106 may transmit the remaining (non-transmitted) portion of the coded block of lower priority data (Coded block part #2) with a higher modulation level and/or transmission power relative to those parameters utilized for transmitting the first portion of the coded block of lower priority data.

In a second option, the UE 106 may retransmit the entire coded block of lower priority data on the remaining portion of the dynamic grant resource using a different modulation level and/or transmission power than that used to transmit lower priority data prior to transmission of the higher priority data. The second option may be considered similar to the first option, except that the UE 106 may transmit the entire coded block of lower priority data, rather than only a remaining portion of the coded block of lower priority data. Therefore, compared to the first option, the first portion of the coded block of lower priority data (Coded block part #1) is retransmitted in the remaining portion of the dynamic grant resource in case of the second option.

The transmission power for transmission on the remaining portion of the dynamic grant resource may be adjusted to increase the probability of successful decoding of the transmitted lower priority data at the gNB 102. As mentioned earlier, example embodiments of methods for adjusting modulation level and/or transmission power will be discussed in more detail later with regard to FIGS. 7 and 8.

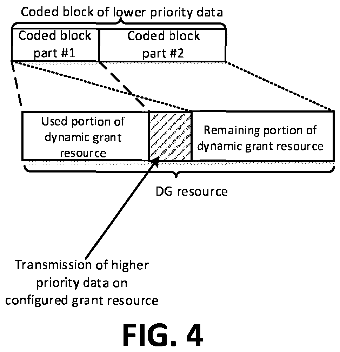

FIG. 4 illustrates an example embodiment of the second option; that is, an example embodiment in which the entire coded block of lower priority data is transmitted on the remaining portion of the dynamic grant resource.

As mentioned above, in contrast to the first option shown in FIG. 3, wherein only the remaining portion of the coded block of lower priority data (Coded block part #2) is mapped to the remaining portion of dynamic grant resource (possibly with a higher modulation level), in the example shown in FIG. 4 the entire coded block of lower priority data (i.e., Coded block part #1 and Coded block part #2) is mapped to, and transmitted on, the remaining portion of the dynamic grant resource after transmission of the higher priority data. Therefore, coded block part #1 is transmitted twice; namely, once on the first portion of the dynamic grant resource before the transmission of the higher priority data and again on the remaining portion of the dynamic grant resource after the transmission of the higher priority data.

In connection with the example embodiment shown in FIG. 4 (the second option), the gNB 102 may decide whether to ignore (or discard) the portion of the coded block (Coded block part #1) of lower priority data transmitted prior to the higher priority data, or to use the received portion of the coded block of lower priority data (Coded block part #1) in combination with the transmitted coded block of lower priority data on the remaining portion of the dynamic grant resource (Coded block part #1 and Coded block part #2) to increase the probability of successful decoding of the lower priority data from the UE 106.

According to at least one example embodiment, the lower priority data may be scheduled on the slot level (e.g., 14 OFDM symbols), while the uplink configured grant resource length may be 2 OFDM symbols (mini-slot). In this example, about 1/7 of the dynamic grant resource is occupied by the higher priority data transmission on the configured grant resource. If the modulation level is changed to fit the entire coded block of lower priority data to the remaining portion of the dynamic grant resource of up to 12 OFDM symbols in this example (e.g., the second option discussed above), then there may still be a relatively high probability that the coded block of lower priority data can be decoded correctly at the gNB 102. The UE 106 may also increase the transmission power to further improve the overall reliability of the transmission.

As discussed above, in the first and/or second options, the UE 106 may adjust the modulation level and/or transmission power for transmission on the remaining portion of the dynamic grant resource.

The UE 106 may determine the adjusted modulation level such that the remaining portion of the coded block of lower priority data (first option) or the entire coded block of lower priority data (second option) may be sent on the remaining portion of the dynamic grant resource. In one example, the UE 106 may select a modulation level with which the lower priority data can be transmitted on the available dynamic grant resource while reducing and/or minimizing unused Resource Elements (REs) of the dynamic grant resource.

In at least some other example embodiments, the UE 106 may decide not to adjust the modulation level relative to the modulation level used to transmit the lower priority data prior to transmitting the higher priority data. For example, if a coding rate for the coded block of lower priority traffic is relatively low and the conflicting configured grant resource is relatively small, then the UE 106 may determine that the modulation level for transmission of the lower priority traffic on the remaining portion of the dynamic grant resource need not be adjusted. In this case, the UE 106 may resume or continue the lower priority traffic transmission using the same modulation level. Different from the first and the second options, this methodology is more similar to punctured transmission. That is to say, the lower priority data transmission is punctured by the higher priority data transmission.

In each of the first and second options, the lower priority traffic need not be recoded by the UE 106 (e.g., only the modulation level and/or transmission power for the transmission is adjusted if necessary).

As a third option, the UE 106 may recode the lower priority data for transmission on the remaining portion of the dynamic grant resource. In this case, the UE may recode the lower priority data with a new MCS (also referred to as MCS level) and retransmit the entire recoded block of lower priority traffic on the remaining portion of the dynamic grant resource.

In at least one example embodiment, the MCS level for transmission on the remaining portion of the dynamic grant resource may be derived based on the remaining portion of the dynamic grant resource. Since both gNB 102 and UE 106 have the same information of the transport block size and the size of the remaining portion of the dynamic grant resource, the gNB 102 and the UE 106 may each determine the MCS (e.g., independently). In another example, the MCS may be determined at the UE 106 and explicitly indicated to the gNB 102, for example, by including control information in the uplink together with the higher priority data.

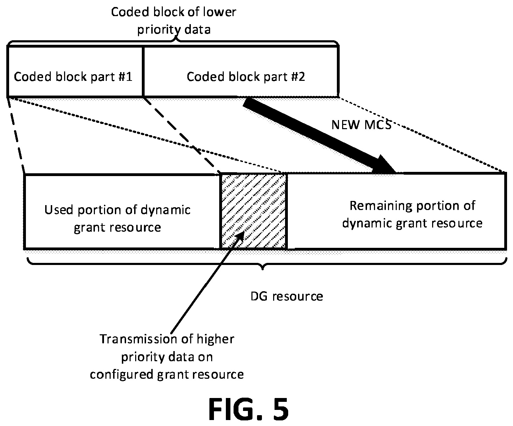

FIG. 5 illustrates an example embodiment of the third option; that is, an example embodiment in which the lower priority data is recoded with a different MCS and then mapped to, and transmitted on, the remaining portion of the dynamic grant resource.

In this third option, the UE 106 may also adjust (e.g., increase) the transmission power for transmitting the lower priority traffic to increase the probability of successful decoding of the received lower priority data at the gNB 102. The power-boosting step may be defined (e.g., preconfigured or predefined), and may be one value or multiple values. In one example, the power boosting step may be 1-3dB.

In at least one other example, the transmission power may be MCS dependent as already specified in 3GPP NR.

FIG. 7 is a flow chart illustrating a method for determining one or more parameters for transmission of lower priority data on the remaining portion of the dynamic grant resource at step S616, according to example embodiments.

As with the example embodiment shown in FIG. 6, the example embodiment shown in FIG. 7 will be discussed with regard to the 3GPP NR access deployment shown in FIG. 1, and with regard to a conflict between a dynamic grant resource for transmitting lower priority data and a configured grant resource for transmitting higher priority data. However, example embodiments should not be limited to this example. The method shown in FIG. 7 may be applicable to at least the first and second options discussed above.

Referring to FIG. 7, at step S702 the UE 106 determines the modulation level for transmitting lower priority data on the remaining portion of the dynamic grant resource based on the size (e.g., number of OFDM symbols or number of Resource Elements (REs)) of the remaining portion of the dynamic grant resource and the size (number of coded bits) of lower priority data to be transmitted. As discussed above, in the first option the UE 106 may transmit (e.g., only) a portion of the coded block of lower priority data on the remaining portion of the dynamic grant resource, whereas in the second option the UE 106 may transmit the entire coded block of lower priority data on the remaining portion of the dynamic grant resource. In at least one example embodiment, the modulation level may be computed in the same or substantially the same manner as discussed later with regard to step S802 in FIG. 8.

At step S704, the UE 106 determines the transmit power for transmitting the lower priority traffic on the remaining portion of the dynamic grant resource based on the size of the remaining portion of the dynamic grant resource and the remaining coded bits of lower priority data to be transmitted.

It should be noted that although FIG. 7 illustrates determining the modulation level and the transmission power, the UE 106 may compute one of modulation level, transmission power, or both modulation level and transmission power as necessary. For example, the UE 106 may adjust transmission power, but not modulation level, or may adjust modulation level, but not transmission power.

FIG. 8 is a flow chart illustrating a method for determining transmission power at step S704 in FIG. 7, according to example embodiments.

As with the example embodiments shown in FIGS. 6 and 7, the example embodiment shown in FIG. 8 will be discussed with regard to the 3GPP NR access deployment shown in FIG. 1, and with regard to a conflict between a dynamic grant resource for transmitting lower priority data and a configured grant resource for transmitting higher priority data. However, example embodiments should not be limited to this example.

For example purposes, the example embodiment shown in FIG. 8 will also be discussed with regard to the first option in which (e.g., only) the remaining portion of the coded block of lower priority data is transmitted on the remaining portion of the dynamic grant resource. It should be understood, however, that a similar method may be applicable to the second option in which the entire coded block of lower priority data is retransmitted on the remaining portion of the dynamic grant resource. Where the method shown in FIG. 8 differs between these two options, additional discussion regarding the differences will be provided.

Referring to FIG. 8, at step S802, the UE 106 determines the (e.g., required) modulation level (number of bits per modulation symbol) for transmitting lower priority data on the remaining portion of the dynamic grant resource based on the size (number of coded bits) of the coded block of lower priority data to be transmitted and the available resources remaining in the dynamic grant resource (number of OFDM symbols and/or REs in the remaining portion of the dynamic grant resource).

For example, in connection with the first option in which the remaining portion of the coded block of lower priority data is to be transmitted on the remaining portion of the dynamic grant resource, the UE 106 may determine the required modulation level according to Equation (1) shown below.

$$M_{cont} = 2 \times \left\lceil \frac{bits_{CB2}}{2 \times RE_{cont}} \right\rceil$$

$$(1)$$

In Equation (1), $M_{cont}$ is the modulation level (e.g., $M_{cont}$ = 2 for Quadrature Phase Shift Keying (QPSK) modulation, $M_{cont}$ = 4 for 16QAM (Quadrature Amplitude Modulation), etc.) for transmitting the remaining portion of the coded block of lower priority data on the remaining portion of the dynamic grant resource, $bits_{CB2}$ is the number of remaining (non-transmitted) coded bits (e.g., coded block part#2 in FIG. 3) in the remaining portion of the coded block of lower priority data, and $RE_{cont}$ is the number of available REs for PUSCH data (not counting the DM-RS REs) in the remaining portion of the dynamic grant resource (potentially after DM-RS insertion). As is generally known, each RE includes one subcarrier during one OFDM symbol, and thus, the number of available REs is indicative of the length (number of available symbols) of the remaining portion of the dynamic grant resource.

Still referring to step S802, in connection with the second option in which the entire coded block of lower priority data is transmitted on the remaining portion of the dynamic grant resource, the UE 106 may determine the required modulation level according to Equation (2) shown below.

$$M_{cont} = 2 \times \left\lceil \frac{bits_{CB\_overall}}{2 \times RE_{cont}} \right\rceil$$

$$(2)$$

In Equation (2), $bits_{CB\_overall}$ denotes the number of coded bits in the entire coded block of lower priority data scheduled for transmission on the dynamic grant resource, and $RE_{cont}$ denotes the number of available REs for PUSCH data (not counting the DM-RS REs) in the remaining portion of the dynamic grant resource (potentially after DM-RS insertion).

In contrast to the first option, if the UE 106 utilizes the remaining portion of the dynamic grant resource to transmit the entire coded block of lower priority data, then the UE 106 may determine the required modulation level $M_{cont}$ based on the number of bits (size) of the entire coded block of lower priority data, rather than the number of remaining coded bits in the coded block of lower priority data.

Returning to FIG. 8, at step S804, the UE 106 determines the spectral efficiency for transmitting lower priority data (either the remaining portion of the coded block or the entire coded block) on the remaining portion of the dynamic grant resource. In at least one example embodiment, the UE 106 determines the spectral efficiency based on the spectral efficiency defined by (according to) the scheduled MCS level for transmission of the lower priority data on the dynamic grant resource known *a priori* at the UE 106, the modulation level $M_{cont}$ determined at step S802, and the modulation level (number of bits per modulation symbol) for the originally scheduled transmission of the coded block of lower priority data on the dynamic grant resource. More specifically, for example, the UE 106 may compute the spectral efficiency $SE_{cont}$ for transmission on the remaining portion of the dynamic grant resource according to Equation (3) shown below.

$$SE_{cont} = SE_{scheduled} \times \frac{M_{cont}}{M_{scheduled}}$$

(3)

In Equation (3), $SE_{scheduled}$ is the spectral efficiency defined (e.g., directly) by the scheduled MCS level, $M_{cont}$ is the modulation level determined at step S802, and $M_{scheduled}$ is the modulation level for the originally scheduled transmission of the coded block of lower priority data on the dynamic grant resource.

At step S806, the UE 106 defines a pseudo MCS based on the spectral efficiency $SE_{cont}$ computed at step S804. According to one or more example embodiments, the spectral efficiency $SE_{cont}$ is mapped to a supported MCS having a spectral efficiency closest to the spectral efficiency $SE_{cont}$ computed at step S804 to define the pseudo MCS $MCS_{cont}$. As discussed herein, the pseudo MCS refers to a MCS derived based on the spectral efficiency $SE_{cont}$, but not the original MCS level. As this combination of spectral efficiency and modulation order may not correspond to any of the existing MCS supported by 3GPP NR, algorithms according to one or more example embodiments look for an existing 3GPP NR MCS with similar spectral efficiency to adjust the transmit power accordingly; that is, for example, this may be used to use the same transmit power as an equivalent 3GPP NR transmission with the similar spectral efficiency. Accordingly, the pseudo MCS is used for setting the transmission power, but is not applied in the actual transmission.

At step S808, the UE 106 sets the transmission power for transmission of lower priority data on the remaining portion of the dynamic grant resource based on the pseudo MCS $MCS_{cont}$. According to at least one example embodiment, the transmission power may be set in any well-known manner (e.g., using the known 3GPP NR Transmit Power Control (TPC) formula), but taking into account the pseudo MCS $MCS_{cont}$.

With regard to the third option discussed above, in which the lower priority data is recoded using a different MCS and then retransmitted on the remaining portion of the dynamic grant resource, the transmission power for the transmission of the recoded block of lower priority data on the remaining portion of the dynamic grant resource may be determined by setting the TPC according to the new MCS directly.

FIG. 9 illustrates an example embodiment of the UE 106.

As shown, the UE 106 includes: a memory 740; a processor 720 connected to the memory 740; various interfaces 760 connected to the processor 720; and one or more antennas or antenna panels 765 connected to the various interfaces 760. The various interfaces 760 and the antenna 765 may constitute a transceiver for transmitting/receiving data to/from the gNB 102 via a plurality of wireless beams or to/from the plurality of TRPs 102A, 102B, 102C, etc. As will be appreciated, depending on the implementation of the UE 106, the UE 106 may include many more components than those shown in FIG. 9. However, it is not necessary that all of these generally conventional components be shown in order to disclose the illustrative example embodiment.

The memory 740 may be a computer readable storage medium that generally includes a random access memory (RAM), read only memory (ROM), and/or a permanent mass storage device, such as a disk drive. The memory 740 also stores an operating system and any other routines/modules/applications for providing the functionalities of the UE 106 (e.g., functionalities of a UE, methods according to the example embodiments, etc.) to be executed by the processor 720. These software components may also be loaded from a separate computer readable storage medium into the memory 740 using a drive mechanism (not shown). Such separate computer readable storage medium may include a disc, tape, DVD/CD-ROM drive, memory card, or other like computer readable storage medium (not shown). In some example embodiments, software components may be loaded into the memory 740 via one of the various interfaces 760, rather than via a computer readable storage medium.

The processor 720 may be configured to carry out instructions of a computer program by performing the arithmetical, logical, and input/output operations of the system. Instructions may be provided to the processor 720 by the memory 740.

The various interfaces 760 may include components that interface the processor 720 with the antenna 765, or other input/output components. As will be understood, the various interfaces 760 and programs stored in the memory 740 to set forth the special purpose functionalities of the UE 106 will vary depending on the implementation of the UE 106.

The interfaces 760 may also include one or more user input devices (e.g., a keyboard, a keypad, a mouse, or the like) and user output devices (e.g., a display, a speaker, or the like).

Although not specifically discussed herein, the configuration shown in FIG. 9 may be utilized to implement, inter alia, the TRPs 102A, 102B, 102C, the gNB 102, other radio access and backhaul network elements and/or devices. In this regard, for example, the memory 740 may store an operating system and any other routines/modules/applications for providing the functionalities of the TRPs, gNBs, etc. (e.g., functionalities of these elements, methods according to the example embodiments, etc.) to be executed by the processor 720.

One or more example embodiments may provide improved flexibility in handling resource conflicts between higher priority traffic and lower priority traffic. Since transmission of lower priority traffic may not be dropped in most cases according to example embodiments, system efficiency may be increased with little or no impact on the transmission of higher priority traffic.

According to one or more example embodiments, depending on the receiver at the gNB, if reception at the gNB is interrupted, the gNB may drop the incomplete data packet and focus on the newly coded block transmitted on the configured grant resource. Alternatively, the gNB may retain the coded bits received on the first portion of the dynamic grant resource (prior to transmission of the higher priority data on the configured grant resource). By transmitting the entire coded block on the remaining portion of the dynamic grant resource for the second or third option, the coded bits received on the earlier portion of dynamic grant resource may be used to improve the probability of successful decoding at the gNB. The MCS information may be known at gNB in order to properly demodulate the received lower priority data.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

When an element is referred to as being "connected," or "coupled," to another element, it can be directly connected or coupled to the other element or intervening elements may be present. By contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Specific details are provided in the following description to provide a thorough understanding of example embodiments. However, it will be understood by one of ordinary skill in the art that example embodiments may be practiced without these specific details. For example, systems may be shown in block diagrams so as not to obscure the example embodiments in unnecessary detail. In other instances, well-known processes, structures and techniques may be shown without unnecessary detail in order to avoid obscuring example embodiments.

As discussed herein, illustrative embodiments will be described with reference to acts and symbolic representations of operations (e.g., in the form of flow charts, flow diagrams, data flow diagrams, structure diagrams, block diagrams, etc.) that may be implemented as program modules or functional processes include routines, programs, objects, components, data structures, etc., that perform particular tasks or implement particular abstract data types and may be implemented using existing hardware at, for example, existing user equipment, base stations, eNBs, RRHs, gNBs, femto base stations, network controllers, computers, or the like. Such existing hardware may be processing or control circuitry such as, but not limited to, one or more processors, one or more Central Processing Units (CPUs), one or more controllers, one or more arithmetic logic units (ALUs), one or more digital signal processors (DSPs), one or more microcomputers, one or more field programmable gate arrays (FPGAs), one or more System-on-Chips (SoCs), one or more programmable logic units (PLUs), one or more microprocessors, one or more Application Specific Integrated Circuits (ASICs), or any other device or devices capable of responding to and executing instructions in a defined manner.

Although a flow chart may describe the operations as a sequential process, many of the operations may be performed in parallel, concurrently or simultaneously. In addition, the order of the operations may be re-arranged. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

As disclosed herein, the term "storage medium," "computer readable storage medium" or "non-transitory computer readable storage medium" may represent one or more devices for storing data, including read only memory (ROM), random access memory (RAM), magnetic RAM, core memory, magnetic disk storage mediums, optical storage mediums, flash memory devices and/or other tangible machine-readable mediums for storing information. The term "computer-readable medium" may include, but is not limited to, portable or fixed storage devices, optical storage devices, and various other mediums capable of storing, containing or carrying instruction(s) and/or data.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks. For example, as mentioned above, according to one or more example embodiments, at least one memory may include or store computer program code, and the at least one memory and the computer program code may be configured to, with at least one processor, cause a network element or network device to perform the necessary tasks. Additionally, the processor, memory and example algorithms, encoded as computer program code, serve as means for providing or causing performance of operations discussed herein.

A code segment of computer program code may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

The terms "including" and/or "having," as used herein, are defined as comprising (i.e., open language). The term "coupled," as used herein, is defined as connected, although not necessarily directly, and not necessarily mechanically. Terminology derived from the word "indicating" (e.g., "indicates" and "indication") is intended to encompass all the various techniques available for communicating or referencing the object/information being indicated. Some, but not all, examples of techniques available for communicating or referencing the object/information being indicated include the conveyance of the object/information being indicated, the conveyance of an identifier of the object/information being indicated, the conveyance of information used to generate the object/information being indicated, the conveyance of some part or portion of the object/information being indicated, the conveyance of some derivation of the object/information being indicated, and the conveyance of some symbol representing the object/information being indicated.

According to example embodiments, user equipment, base stations, eNBs, RRHs, gNBs, femto base stations, network controllers, computers, or the like, may be (or include) hardware, firmware, hardware executing software or any combination thereof. Such hardware may include processing or control circuitry such as, but not limited to, one or more processors, one or more CPUs, one or more controllers, one or more ALUs, one or more DSPs, one or more microcomputers, one or more FPGAs, one or more SoCs, one or more PLUs, one or more microprocessors, one or more ASICs, or any other device or devices capable of responding to and executing instructions in a defined manner.

Benefits, other advantages, and solutions to problems have been described above with regard to specific embodiments of the invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

## Claims

1. A user equipment (106) comprising:

   at least one processor; and
   at least one memory including computer program code, the at least one memory and the computer program code configured to, with the at least one processor, cause the user equipment to

   transmit a block of first data on a first wireless resource, the first wireless resource being a granted resource for transmitting on a Physical Uplink Shared Channel,
   stop transmission of the block of first data in response to determining a wireless resource conflict in the time domain between the first wireless resource for transmitting the block of first data and a second wireless resource for transmitting a block of second data, the second wireless resource being a granted resource for transmitting on the Physical Uplink Shared Channel, the second wireless resource overlapping in time with at least a portion of the first wireless resource, said block of second data having a higher priority than the priority of said block of first data,
   transmit the block of second data on the second wireless resource,
   decide whether a remaining unused portion of the first wireless resource after transmission of the block of second data exceeds a threshold,
   determine at least one parameter for transmitting at least a remaining portion of the block of first data on the remaining unused portion of the first wireless resource and in response to deciding that the remaining unused portion of the first wireless resource exceeds the threshold, the at least one parameter including at least one of a modulation level or a transmission power, and the at least one parameter being based on prioritization and multiplexing information at the user equipment, said prioritization and multiplexing information specifying the handling by the user equipment (106) of a transmission of a block of data having a lower priority in the event that the transmission is impacted by a transmission of a block of data having a higher priority, and transmit at least the remaining portion of the block of first data on the remaining unused portion of the first wireless resource according to the at least one parameter.

2. The user equipment (106) of claim 1, wherein the at least one memory and the computer program code are configured to, with the at least one processor, cause the user equipment to transmit only the remaining portion of the block of first data on the remaining unused portion of the first wireless resource according to the at least one parameter.

3. The user equipment (106) according to any of claims 1-2, wherein the at least one memory and the computer program code are configured to, with the at least one processor, cause the user equipment to

determine the modulation level for transmitting the remaining portion of the block of first data on the remaining unused portion of the first wireless resource based on a size of the remaining unused portion of the first wireless resource and a size of the remaining portion of the block of first data, and
transmit the remaining portion of the block of first data utilizing the modulation level.

4. The user equipment (106) according to any of claims 1-3, wherein the at least one memory and the computer program code are configured to, with the at least one processor, cause the user equipment to

determine a transmission power for transmitting the remaining portion of the block of first data on the remaining unused portion of the first wireless resource based on the size of the remaining unused portion of the first wireless resource and the size of the remaining portion of the block of first data, and
transmit the remaining portion of the block of first data utilizing the modulation level and the transmission power.

5. The user equipment (106) according to any of claims 1-4, wherein the at least one memory and the computer program code are configured to, with the at least one processor, cause the user equipment to

determine a transmission power for transmitting the remaining portion of the block of first data on the remaining unused portion of the first wireless resource based on a size of the remaining unused portion of the first wireless resource and a size of the remaining portion of the block of first data, and
transmit the remaining portion of the block of first data at the transmission power.

6. The user equipment (106) according to any of claims 1-5, wherein the at least one memory and the computer program code are configured to, with the at least one processor, cause the user equipment to

define a modulation level for transmitting the remaining portion of the block of first data on the remaining unused portion of the first wireless resource based on the size of the remaining unused portion of the first wireless resource and the size of the remaining portion of the block of first data,
determine a spectral efficiency for transmitting the remaining portion of the block of first data on the remaining unused portion of the first wireless resource,
define a pseudo modulation and coding scheme for the remaining portion of the block of first data based on the determined spectral efficiency for transmitting the remaining portion of the block of first data on the remaining unused portion of the first wireless resource, and
set the transmission power based on the pseudo modulation and coding scheme.

7. The user equipment (106) according to any of claims 1-6, wherein the at least one memory and the computer program code are configured to, with the at least one processor, cause the user equipment to
determine the spectral efficiency for transmitting the remaining portion of the block of first data on the remaining unused portion of the first wireless resource based on a spectral efficiency for a transmitted portion of the block of first data, a modulation level used to transmit the transmitted portion of the block of first data, and the modulation level for transmitting the remaining portion of the block of first data.

8. The user equipment (106) according to any of claims 1-7, wherein the at least one memory and the computer program code are configured to, with the at least one processor, cause the user equipment to transmit all coded bits in the block of first data on the remaining unused portion of the first wireless resource according to the at least one parameter.

9. The user equipment (106) according to any of claims 1-8, wherein the at least one memory and the computer program code are configured to, with the at least one processor, cause the user equipment to

determine the modulation level for transmitting the block of first data on the remaining unused portion of the first wireless resource based on a size of the remaining unused portion of the first wireless resource and a size of the block of first data, and

transmit the block of first data utilizing the modulation level.

10. The user equipment (106) according to any of claims 1-9, wherein the at least one memory and the computer program code are configured to, with the at least one processor, cause the user equipment to

determine a transmission power for transmitting the block of first data on the remaining unused portion of the first wireless resource based on the size of the remaining unused portion of the first wireless resource and the size of the block of first data, and

transmit the block of first data utilizing the modulation level and the transmission power.

11. The user equipment (106) according to any of claims 1-10, wherein the at least one memory and the computer program code are configured to, with the at least one processor, cause the user equipment to

determine a transmission power for transmitting the block of first data on the remaining unused portion of the first wireless resource based on a size of the remaining unused portion of the first wireless resource and a size of the block of first data, and

transmit the block of first data at the transmission power.

12. The user equipment (106) according to any of claims 1-11, wherein the at least one memory and the computer program code are configured to, with the at least one processor, cause the user equipment to

define a modulation level for transmitting the block of first data on the remaining unused portion of the first wireless resource based on the size of the remaining portion unused of the first wireless resource and the size of the block of first data,

determine a spectral efficiency for transmitting the block of first data on the remaining unused portion of the first wireless resource,

define a pseudo modulation and coding scheme for the block of first data based on the determined spectral efficiency for transmitting the block of first data on the remaining unused portion of the first wireless resource, and

set the transmission power based on the pseudo modulation and coding scheme.

13. The user equipment (106) according to any of claims 1-12, wherein the at least one memory and the computer program code are configured to, with the at least one processor, cause the user equipment to determine the spectral efficiency for transmitting the block of first data on the remaining unused portion of the first wireless resource based on a spectral efficiency for a transmitted portion of the block of first data, a modulation level used to transmit the transmitted portion of the block of first data, and the modulation level for transmitting the block of first data.

14. A method for transmitting data, the method comprising:

transmitting (S604) a block of first data on a first wireless resource, the first wireless resource being a granted resource for transmitting on a Physical Uplink Shared Channel;

stopping (S609) transmission of the block of first data in response to determining (S606) a wireless resource conflict in the time domain between the first wireless resource for transmitting the block of first data and a second wireless resource for transmitting a block of second data, the second wireless resource being a granted resource for transmitting on the Physical Uplink Shared Channel, the second wireless resource overlapping in time with at least a portion of the first wireless resource, said block of second data having a higher priority than the priority of said block of first data;

transmitting the block of second data on the second wireless resource;

deciding (S612) whether a remaining unused portion of the first wireless resource after transmission of the block of second data exceeds a threshold;

determining (S616) at least one parameter for transmitting at least a remaining portion of the block of first data on the remaining unused portion of the first wireless resource and in response to deciding that the remaining unused portion of the first wireless resource exceeds the threshold, the at least one parameter including at least one of a modulation level or a transmission power, and the at least one parameter being based on prioritization and multiplexing information at a user equipment (106), said prioritization and multiplexing information specifying the handling by the user equipment (106) of a transmission of a block of data having a lower priority in the event that the transmission is impacted by a transmission of a block of data having a higher priority; and
transmitting (S618) at least the remaining portion of the block of first data on the remaining unused portion of the first wireless resource according to the at least one parameter.

15. The method of claim 14, wherein the transmitting (S618) at least the remaining portion of the block of first data on the remaining unused portion of the first wireless resource according to the at least one parameter comprises:
transmitting only the remaining portion of the block of first data on the remaining unused portion of the first wireless resource according to the at least one parameter.


**Patentansprüche**

1. Teilnehmereinrichtung (106), die Folgendes umfasst:

mindestens einen Prozessor; und
mindestens einen Speicher, der Computerprogrammcode beinhaltet, wobei der mindestens eine Speicher und der Computerprogrammcode dazu ausgelegt sind, die Teilnehmereinrichtung mit dem mindestens einen Prozessor zu Folgendem zu veranlassen
Übertragen eines Blocks von ersten Daten auf einer ersten drahtlosen Ressource, wobei die erste drahtlose Ressource eine gewährte Ressource zum Übertragen auf einem gemeinsam verwendeten physischen Uplinkkanal ist,
Beenden der Übertragung des Blocks von ersten Daten in Reaktion auf das Bestimmen eines drahtlosen Ressourcenkonflikts in der Zeitdomäne zwischen der ersten drahtlosen Ressource zum Übertragen des Blocks von ersten Daten und einer zweiten drahtlosen Ressource zum Übertragen eines Blocks von zweiten Daten, wobei die zweite drahtlose Ressource eine gewährte Ressource zum Übertragen auf dem gemeinsam verwendeten physischen Uplinkkanal ist, wobei die zweite drahtlose Ressource mindestens einen Abschnitt der ersten drahtlosen Ressource in der Zeit überlappt, wobei der Block von zweiten Daten eine höhere Priorität aufweist als die Priorität des Blocks von ersten Daten,
Übertragen des Blocks von zweiten Daten auf der zweiten drahtlosen Ressource,
Beschließen, ob ein verbleibender nicht verwendeter Abschnitt der ersten drahtlosen Ressource nach Übertragung des Blocks von zweiten Daten einen Schwellwert überschreitet,
Bestimmen von mindestens einem Parameter zum Übertragen von mindestens einem verbleibenden Abschnitt des Blocks von ersten Daten auf dem verbleibenden nicht verwendeten Abschnitt der ersten drahtlosen Ressource und in Reaktion auf das Beschließen, dass der verbleibende nicht verwendete Abschnitt der ersten drahtlosen Ressource den Schwellwert überschreitet, wobei der mindestens eine Parameter mindestens eines von einem Modulationspegel oder einer Sendeleistung beinhaltet und wobei der mindestens eine Parameter auf Priorisierungs- und Multiplexinginformationen an der Teilnehmereinrichtung basiert, wobei die Priorisierungs- und Multiplexinginformationen die Handhabung einer Übertragung eines Blocks von Daten, die in dem Fall, in dem die Übertragung durch eine Übertragung eines Blocks von Daten beeinträchtigt wird, der eine höhere Priorität aufweist, eine geringere Priorität aufweist, durch die Teilnehmereinrichtung (106) spezifizieren, und
Übertragen von mindestens dem verbleibenden Abschnitt des Blocks von ersten Daten auf dem verbleibenden nicht verwendeten Abschnitt der ersten drahtlosen Ressource gemäß dem mindestens einen Parameter.

2. Teilnehmereinrichtung (106) nach Anspruch 1, wobei der mindestens eine Speicher und der Computerprogrammcode dazu ausgelegt sind, die Teilnehmereinrichtung mit dem mindestens einen Prozessor zu veranlassen, nur den verbleibenden Abschnitt des Blocks von ersten Daten auf dem verbleibenden nicht verwendeten Abschnitt der ersten drahtlosen Ressource gemäß dem mindestens einen Parameter zu übertragen.

3. Teilnehmereinrichtung nach (106) nach einem der Ansprüche 1 bis 2, wobei der mindestens eine Speicher und der Computerprogrammcode dazu ausgelegt sind, mit dem mindestens einen Prozessor die Teilnehmereinrichtung zu Folgendem zu veranlassen

Bestimmen des Modulationspegels zum Übertragen des verbleibenden Abschnitts des Blocks von ersten Daten auf dem verbleibenden nicht verwendeten Abschnitt der ersten drahtlosen Ressource auf Basis einer Größe des verbleibenden nicht verwendeten Abschnitts der ersten drahtlosen Ressource und einer Größe des verbleibenden Abschnitts des Blocks von ersten Daten, und
Übertragen des verbleibenden Abschnitts des Blocks von ersten Daten unter Nutzung des Modulationspegels.

4. Teilnehmereinrichtung nach (106) nach einem der Ansprüche 1 bis 3, wobei der mindestens eine Speicher und der Computerprogrammcode dazu ausgelegt sind, mit dem mindestens einen Prozessor die Teilnehmereinrichtung zu Folgendem zu veranlassen

Bestimmen einer Sendeleistung zum Übertragen des verbleibenden Abschnitts des Blocks von ersten Daten auf dem verbleibenden nicht verwendeten Abschnitt der ersten drahtlosen Ressource auf Basis der Größe des verbleibenden nicht verwendeten Abschnitts der ersten drahtlosen Ressource und der Größe des verbleibenden Abschnitts des Blocks von ersten Daten, und
Übertragen des verbleibenden Abschnitts des Blocks von ersten Daten unter Nutzung des Modulationspegels und der Sendeleistung.

5. Teilnehmereinrichtung nach (106) nach einem der Ansprüche 1 bis 4, wobei der mindestens eine Speicher und der Computerprogrammcode dazu ausgelegt sind, mit dem mindestens einen Prozessor die Teilnehmereinrichtung zu Folgendem zu veranlassen

Bestimmen einer Sendeleistung zum Übertragen des verbleibenden Abschnitts des Blocks von ersten Daten auf dem verbleibenden nicht verwendeten Abschnitt der ersten drahtlosen Ressource auf Basis einer Größe des verbleibenden nicht verwendeten Abschnitts der ersten drahtlosen Ressource und einer Größe des verbleibenden Abschnitts des Blocks von ersten Daten, und
Übertragen des verbleibenden Abschnitts des Blocks von ersten Daten mit der Sendeleistung.

6. Teilnehmereinrichtung nach (106) nach einem der Ansprüche 1 bis 5, wobei der mindestens eine Speicher und der Computerprogrammcode dazu ausgelegt sind, mit dem mindestens einen Prozessor die Teilnehmereinrichtung zu Folgendem zu veranlassen

Definieren eines Modulationspegels zum Übertragen des verbleibenden Abschnitts des Blocks von ersten Daten auf dem verbleibenden nicht verwendeten Abschnitt der ersten drahtlosen Ressource auf Basis der Größe des verbleibenden nicht verwendeten Abschnitts der ersten drahtlosen Ressource und der Größe des verbleibenden Abschnitts des Blocks von ersten Daten,
Bestimmen einer spektralen Effizienz zum Übertragen des verbleibenden Abschnitts des Blocks von ersten Daten auf dem verbleibenden nicht verwendeten Abschnitt der ersten drahtlosen Ressource,
Definieren eines Pseudomodulations- und Codierschemas für den verbleibenden Abschnitt des Blocks von ersten Daten auf Basis der bestimmten spektralen Effizienz zum Übertragen des verbleibenden Abschnitts des Blocks von ersten Daten auf dem verbleibenden nicht verwendeten Abschnitt der ersten drahtlosen Ressource, und
Einstellen der Sendeleistung auf Basis des Pseudomodulations- und Codierschemas.

7. Teilnehmereinrichtung nach (106) nach einem der Ansprüche 1 bis 6, wobei der mindestens eine Speicher und der Computerprogrammcode dazu ausgelegt sind, mit dem mindestens einen Prozessor die Teilnehmereinrichtung zu Folgendem zu veranlassen
Bestimmen der spektralen Effizienz zum Übertragen des verbleibenden Abschnitts des Blocks von ersten Daten auf dem verbleibenden nicht verwendeten Abschnitt der ersten drahtlosen Ressource auf Basis einer spektralen Effizienz für einen übertragenen Abschnitt des Blocks von ersten Daten, eines Modulationspegels, der zum Übertragen des übertragenen Abschnitts des Blocks von ersten Daten verwendet wird, und des Modulationspegels zum Übertragen des verbleibenden Abschnitts des Blocks von ersten Daten.

8. Teilnehmereinrichtung (106) nach einem der Ansprüche 1 bis 7, wobei der mindestens eine Speicher und der Computerprogrammcode dazu ausgelegt sind, die Teilnehmereinrichtung mit dem mindestens einen Prozessor zu veranlassen, alle codierten Bits im Block von ersten Daten auf dem verbleibenden nicht verwendeten Abschnitt der ersten drahtlosen Ressource gemäß dem mindestens einen Parameter zu übertragen.

9. Teilnehmereinrichtung nach (106) nach einem der Ansprüche 1 bis 8, wobei der mindestens eine Speicher und der Computerprogrammcode dazu ausgelegt sind, mit dem mindestens einen Prozessor die Teilnehmereinrichtung zu Folgendem zu veranlassen

Bestimmen des Modulationspegels zum Übertragen des Blocks von ersten Daten auf dem verbleibenden nicht verwendeten Abschnitt der ersten drahtlosen Ressource auf Basis einer Größe des verbleibenden nicht verwendeten Abschnitts der ersten drahtlosen Ressource und einer Größe des Blocks von ersten Daten, und

Übertragen des Blocks von ersten Daten unter Nutzung des Modulationspegels.

10. Teilnehmereinrichtung nach (106) nach einem der Ansprüche 1 bis 9, wobei der mindestens eine Speicher und der Computerprogrammcode dazu ausgelegt sind, mit dem mindestens einen Prozessor die Teilnehmereinrichtung zu Folgendem zu veranlassen

Bestimmen einer Sendeleistung zum Übertragen des Blocks von ersten Daten auf dem verbleibenden nicht verwendeten Abschnitt der ersten drahtlosen Ressource auf Basis der Größe des verbleibenden nicht verwendeten Abschnitts der ersten drahtlosen Ressource und der Größe des Blocks von ersten Daten, und Übertragen des Blocks von ersten Daten unter Nutzung des Modulationspegels und der Sendeleistung.

11. Teilnehmereinrichtung nach (106) nach einem der Ansprüche 1 bis 10, wobei der mindestens eine Speicher und der Computerprogrammcode dazu ausgelegt sind, mit dem mindestens einen Prozessor die Teilnehmereinrichtung zu Folgendem zu veranlassen

Bestimmen einer Sendeleistung zum Übertragen des Blocks von ersten Daten auf dem verbleibenden nicht verwendeten Abschnitt der ersten drahtlosen Ressource auf Basis einer Größe des verbleibenden nicht verwendeten Abschnitts der ersten drahtlosen Ressource und einer Größe des Blocks von ersten Daten, und Übertragen des Blocks von ersten Daten mit der Sendeleistung.

12. Teilnehmereinrichtung nach (106) nach einem der Ansprüche 1 bis 11, wobei der mindestens eine Speicher und der Computerprogrammcode dazu ausgelegt sind, mit dem mindestens einen Prozessor die Teilnehmereinrichtung zu Folgendem zu veranlassen

Definieren eines Modulationspegels zum Übertragen des Blocks von ersten Daten auf dem verbleibenden nicht verwendeten Abschnitt der ersten drahtlosen Ressource auf Basis der Größe des verbleibenden nicht verwendeten Abschnitts der ersten drahtlosen Ressource und der Größe des Blocks von ersten Daten, Bestimmen einer spektralen Effizienz zum Übertragen des Blocks von ersten Daten auf dem verbleibenden nicht verwendeten Abschnitt der ersten drahtlosen Ressource, Definieren eines Pseudomodulations- und Codierschemas für den Block von ersten Daten auf Basis der bestimmten spektralen Effizienz zum Übertragen des Blocks von ersten Daten auf dem verbleibenden nicht verwendeten Abschnitt der ersten drahtlosen Ressource, und Einstellen der Sendeleistung auf Basis des Pseudomodulations- und Codierschemas.

13. Teilnehmereinrichtung nach (106) nach einem der Ansprüche 1 bis 12, wobei der mindestens eine Speicher und der Computerprogrammcode dazu ausgelegt sind, mit dem mindestens einen Prozessor die Teilnehmereinrichtung zu Folgendem zu veranlassen Bestimmen der spektralen Effizienz zum Übertragen des Blocks von ersten Daten auf dem verbleibenden nicht verwendeten Abschnitt der ersten drahtlosen Ressource auf Basis einer spektralen Effizienz für einen übertragenen Abschnitt des Blocks von ersten Daten, eines Modulationspegels, der zum Übertragen des übertragenen Abschnitts des Blocks von ersten Daten verwendet wird, und des Modulationspegels zum Übertragen des Blocks von ersten Daten.

14. Verfahren zum Übertragen von Daten, wobei das Verfahren Folgendes umfasst:

Übertragen (S604) eines Blocks von ersten Daten auf einer ersten drahtlosen Ressource, wobei die erste drahtlose Ressource eine gewährte Ressource zum Übertragen auf einem gemeinsam verwendeten physischen Uplinkkanal ist; Beenden (S609) der Übertragung des Blocks von ersten Daten in Reaktion auf das Bestimmen (S606) eines drahtlosen Ressourcenkonflikts in der Zeitdomäne zwischen der ersten drahtlosen Ressource zum Übertragen des Blocks von ersten Daten und einer zweiten drahtlosen Ressource zum Übertragen eines Blocks von zweiten Daten, wobei die zweite drahtlose Ressource eine gewährte Ressource zum Übertragen auf dem gemeinsam verwendeten physischen Uplinkkanal ist, wobei die zweite drahtlose Ressource mindestens einen Abschnitt der ersten drahtlosen Ressource in der Zeit überlappt, wobei der Block von zweiten Daten eine höhere Priorität aufweist als die Priorität des Blocks von ersten Daten; Übertragen des Blocks von zweiten Daten auf der zweiten drahtlosen Ressource; Beschließen (S612), ob ein verbleibender nicht verwendeter Abschnitt der ersten drahtlosen Ressource nach Übertragung des Blocks von zweiten Daten einen Schwellwert überschreitet;

Bestimmen (S616) von mindestens einem Parameter zum Übertragen von mindestens einem verbleibenden Abschnitt des Blocks von ersten Daten auf dem verbleibenden nicht verwendeten Abschnitt der ersten drahtlosen Ressource und in Reaktion auf das Beschließen, dass der verbleibende nicht verwendete Abschnitt der ersten drahtlosen Ressource den Schwellwert überschreitet, wobei der mindestens eine Parameter mindestens eines von einem Modulationspegel oder einer Sendeleistung beinhaltet, und wobei der mindestens eine Parameter auf Priorisierungs- und Multiplexinginformationen an einer Teilnehmereinrichtung (106) basiert, wobei die Priorisierungs- und Multiplexinginformationen die Handhabung einer Übertragung eines Blocks von Daten, die in dem Fall, in dem die Übertragung durch eine Übertragung eines Blocks von Daten beeinträchtigt wird, der eine höhere Priorität aufweist, eine geringere Priorität aufweist, durch die Teilnehmereinrichtung (106) spezifizieren, und Übertragen (S618) von mindestens dem verbleibenden Abschnitt des Blocks von ersten Daten auf dem verbleibenden nicht verwendeten Abschnitt der ersten drahtlosen Ressource gemäß dem mindestens einen Parameter.

15. Verfahren nach Anspruch 14, wobei das Übertragen (S618) von mindestens dem verbleibenden Abschnitt des Blocks von ersten Daten auf dem verbleibenden nicht verwendeten Abschnitt der ersten drahtlosen Ressource gemäß dem mindestens einen Parameter Folgendes umfasst:
Übertragen nur des verbleibenden Abschnitts des Blocks von ersten Daten auf dem verbleibenden nicht verwendeten Abschnitt der ersten drahtlosen Ressource gemäß dem mindestens einen Parameter.

**Revendications**

1. Équipement utilisateur (106) comprenant :

au moins un processeur ; et
au moins une mémoire comportant un code de programme informatique, l'au moins une mémoire et le code de programme informatique étant configurés pour, avec l'au moins un processeur, amener l'équipement utilisateur à transmettre un bloc de premières données sur une première ressource sans fil, la première ressource sans fil étant une ressource accordée pour la transmission sur un canal physique partagé de liaison montante,
arrêter la transmission du bloc de premières données en réponse à la détermination d'un conflit de ressources sans fil dans le domaine temporel entre la première ressource sans fil pour transmettre le bloc de premières données et une deuxième ressource sans fil pour transmettre un bloc de deuxièmes données, la deuxième ressource sans fil étant une ressource accordée pour la transmission sur le canal physique partagé de liaison montante, la deuxième ressource sans fil se chevauchant dans le temps avec au moins une partie de la première ressource sans fil, ledit bloc de deuxièmes données ayant une priorité plus élevée que la priorité dudit bloc de premières données,
transmettre le bloc de deuxièmes données sur la deuxième ressource sans fil,
décider si une partie inutilisée restante de la première ressource sans fil après la transmission du bloc de deuxièmes données dépasse un seuil,
déterminer au moins un paramètre pour transmettre au moins une partie restante du bloc de premières données sur la partie inutilisée restante de la première ressource sans fil et en réponse à la décision selon laquelle la partie inutilisée restante de la première ressource sans fil dépasse le seuil, l'au moins un paramètre comportant au moins un parmi un niveau de modulation ou une puissance de transmission, et l'au moins un paramètre étant basé sur des informations de priorisation et de multiplexage au niveau de l'équipement utilisateur, lesdites informations de priorisation et de multiplexage spécifiant le traitement par l'équipement utilisateur (106) d'une transmission d'un bloc de données ayant une priorité inférieure dans le cas où la transmission est affectée par une transmission d'un bloc de données ayant une priorité plus élevée, et
transmettre au moins la partie restante du bloc de premières données sur la partie inutilisée restante de la première ressource sans fil selon l'au moins un paramètre.

2. Équipement utilisateur (106) selon la revendication 1, dans lequel l'au moins une mémoire et le code de programme informatique sont configurés pour, avec l'au moins un processeur, amener l'équipement utilisateur à ne transmettre que la partie restante du bloc de premières données sur la partie inutilisée restante de la première ressource sans fil selon l'au moins un paramètre.

3. Équipement utilisateur (106) selon l'une des revendications 1 à 2, dans lequel l'au moins une mémoire et le code de programme informatique sont configurés pour, avec l'au moins un processeur, amener l'équipement utilisateur à

déterminer le niveau de modulation pour transmettre la partie restante du bloc de premières données sur la partie inutilisée restante de la première ressource sans fil sur la base d'une taille de la partie inutilisée restante de la première ressource sans fil et d'une taille de la partie restante du bloc de premières données, et transmettre la partie restante du bloc de premières données en utilisant le niveau de modulation.

**4.** Équipement utilisateur (106) selon l'une des revendications 1 à 3, dans lequel l'au moins une mémoire et le code de programme informatique sont configurés pour, avec l'au moins un processeur, amener l'équipement utilisateur à

déterminer une puissance de transmission pour transmettre la partie restante du bloc de premières données sur la partie inutilisée restante de la première ressource sans fil sur la base de la taille de la partie inutilisée restante de la première ressource sans fil et de la taille de la partie restante du bloc de premières données, et transmettre la partie restante du bloc de premières données en utilisant le niveau de modulation et la puissance de transmission.

**5.** Équipement utilisateur (106) selon l'une des revendications 1 à 4, dans lequel l'au moins une mémoire et le code de programme informatique sont configurés pour, avec l'au moins un processeur, amener l'équipement utilisateur à

déterminer une puissance de transmission pour transmettre la partie restante du bloc de premières données sur la partie inutilisée restante de la première ressource sans fil sur la base d'une taille de la partie inutilisée restante de la première ressource sans fil et d'une taille de la partie restante du bloc de premières données, et transmettre la partie restante du bloc de premières données à la puissance de transmission.

**6.** Équipement utilisateur (106) selon l'une des revendications 1 à 5, dans lequel l'au moins une mémoire et le code de programme informatique sont configurés pour, avec l'au moins un processeur, amener l'équipement utilisateur à

définir un niveau de modulation pour transmettre la partie restante du bloc de premières données sur la partie inutilisée restante de la première ressource sans fil sur la base de la taille de la partie inutilisée restante de la première ressource sans fil et de la taille de la partie restante du bloc de premières données, déterminer une efficacité spectrale pour transmettre la partie restante du bloc de premières données sur la partie inutilisée restante de la première ressource sans fil, définir un schéma de pseudo-modulation et de codage pour la partie restante du bloc de premières données sur la base de l'efficacité spectrale déterminée pour transmettre la partie restante du bloc de premières données sur la partie inutilisée restante de la première ressource sans fil, et définir la puissance de transmission sur la base du schéma de pseudo-modulation et de codage.

**7.** Équipement utilisateur (106) selon l'une des revendications 1 à 6, dans lequel l'au moins une mémoire et le code de programme informatique sont configurés pour, avec l'au moins un processeur, amener l'équipement utilisateur à déterminer l'efficacité spectrale pour transmettre la partie restante du bloc de premières données sur la partie inutilisée restante de la première ressource sans fil sur la base d'une efficacité spectrale pour une partie transmise du bloc de premières données, d'un niveau de modulation utilisé pour transmettre la partie transmise du bloc de premières données et du niveau de modulation pour transmettre la partie restante du bloc de premières données.

**8.** Équipement utilisateur (106) selon l'une des revendications 1 à 7, dans lequel l'au moins une mémoire et le code de programme informatique sont configurés pour, avec l'au moins un processeur, amener l'équipement utilisateur à transmettre tous les bits codés dans le bloc de premières données sur la partie inutilisée restante de la première ressource sans fil selon l'au moins un paramètre.

**9.** Équipement utilisateur (106) selon l'une des revendications 1 à 8, dans lequel l'au moins une mémoire et le code de programme informatique sont configurés pour, avec l'au moins un processeur, amener l'équipement utilisateur à

déterminer le niveau de modulation pour transmettre le bloc de premières données sur la partie inutilisée restante de la première ressource sans fil sur la base d'une taille de la partie inutilisée restante de la première ressource sans fil et d'une taille du bloc de premières données, et transmettre le bloc de premières données en utilisant le niveau de modulation.

**10.** Équipement utilisateur (106) selon l'une des revendications 1 à 9, dans lequel l'au moins une mémoire et le code de programme informatique sont configurés pour, avec l'au moins un processeur, amener l'équipement utilisateur à

déterminer une puissance de transmission pour transmettre le bloc de premières données sur la partie inutilisée restante de la première ressource sans fil sur la base de la taille de la partie inutilisée restante de la première ressource sans fil et de la taille du bloc de premières données, et

transmettre le bloc de premières données en utilisant le niveau de modulation et la puissance de transmission.

11. Équipement utilisateur (106) selon l'une des revendications 1 à 10, dans lequel l'au moins une mémoire et le code de programme informatique sont configurés pour, avec l'au moins un processeur, amener l'équipement utilisateur à

déterminer une puissance de transmission pour transmettre le bloc de premières données sur la partie inutilisée restante de la première ressource sans fil sur la base d'une taille de la partie inutilisée restante de la première ressource sans fil et d'une taille du bloc de premières données, et

transmettre le bloc de premières données à la puissance de transmission.

12. Équipement utilisateur (106) selon l'une des revendications 1 à 11, dans lequel l'au moins une mémoire et le code de programme informatique sont configurés pour, avec l'au moins un processeur, amener l'équipement utilisateur à

définir un niveau de modulation pour transmettre le bloc de premières données sur la partie inutilisée restante de la première ressource sans fil sur la base de la taille de la partie restante inutilisée de la première ressource sans fil et de la taille du bloc de premières données,

déterminer une efficacité spectrale pour transmettre le bloc de premières données sur la partie inutilisée restante de la première ressource sans fil,

définir un schéma de pseudo-modulation et de codage pour le bloc de premières données sur la base de l'efficacité spectrale déterminée pour transmettre le bloc de premières données sur la partie inutilisée restante de la première ressource sans fil, et

définir la puissance de transmission sur la base du schéma de pseudo-modulation et de codage.

13. Équipement utilisateur (106) selon l'une des revendications 1 à 12, dans lequel l'au moins une mémoire et le code de programme informatique sont configurés pour, avec l'au moins un processeur, amener l'équipement utilisateur à déterminer l'efficacité spectrale pour transmettre le bloc de premières données sur la partie inutilisée restante de la première ressource sans fil sur la base d'une efficacité spectrale pour une partie transmise du bloc de premières données, d'un niveau de modulation utilisé pour transmettre la partie transmise du bloc de premières données et du niveau de modulation pour transmettre le bloc de premières données.

14. Procédé pour transmettre des données, le procédé comprenant les étapes suivantes :

transmettre (S604) un bloc de premières données sur une première ressource sans fil, la première ressource sans fil étant une ressource accordée pour la transmission sur un canal physique partagé de liaison montante ;

arrêter (S609) la transmission du bloc de premières données en réponse à la détermination (S606) d'un conflit de ressources sans fil dans le domaine temporel entre la première ressource sans fil pour transmettre le bloc de premières données et une deuxième ressource sans fil pour transmettre un bloc de deuxièmes données, la deuxième ressource sans fil étant une ressource accordée pour la transmission sur le canal physique partagé de liaison montante, la deuxième ressource sans fil se chevauchant dans le temps avec au moins une partie de la première ressource sans fil, ledit bloc de deuxièmes données ayant une priorité plus élevée que la priorité dudit bloc de premières données ;

transmettre le bloc de deuxièmes données sur la deuxième ressource sans fil ;

décider (S612) si une partie inutilisée restante de la première ressource sans fil après la transmission du bloc de deuxièmes données dépasse un seuil ;

déterminer (S616) au moins un paramètre pour transmettre au moins une partie restante du bloc de premières données sur la partie inutilisée restante de la première ressource sans fil et en réponse à la décision selon laquelle la partie inutilisée restante de la première ressource sans fil dépasse le seuil, l'au moins un paramètre comportant au moins un parmi un niveau de modulation ou une puissance de transmission, et l'au moins un paramètre étant basé sur des informations de priorisation et de multiplexage au niveau d'un équipement utilisateur (106), lesdites informations de priorisation et de multiplexage spécifiant le traitement par l'équipement utilisateur (106) d'une transmission d'un bloc de données ayant une priorité inférieure dans le cas où la transmission est affectée par une transmission d'un bloc de données ayant une priorité plus élevée ; et

transmettre (S618) au moins la partie restante du bloc de premières données sur la partie inutilisée restante de la première ressource sans fil selon l'au moins un paramètre.

**EP 3 949 629 B1**

**15.** Procédé selon la revendication 14, dans lequel la transmission (S618) d'au moins la partie restante du bloc de premières données sur la partie inutilisée restante de la première ressource sans fil selon l'au moins un paramètre comprend ce qui suit :

ne transmettre que la partie restante du bloc de premières données sur la partie inutilisée restante de la première ressource sans fil selon l'au moins un paramètre.

**FIG. 1**

FIG. 2

Coded block of lower priority data

| Coded block part #1 | Coded block part #2 |
|---|---|

| Used portion of dynamic grant resource | ▨ | Remaining portion of dynamic grant resource |
|---|---|---|

DG resource

Transmission of higher
priority data on
configured grant resource

# FIG. 3

Coded block of lower priority data

| Coded block part #1 | Coded block part #2 |
|---|---|

| Used portion of dynamic grant resource | | Remaining portion of dynamic grant resource |
|---|---|---|

DG resource

Transmission of higher
priority data on
configured grant resource

# FIG. 4

Coded block of lower
priority data

| Coded block part #1 | Coded block part #2 |
| --- | --- |

NEW MCS

| Used portion of dynamic grant resource | | Remaining portion of dynamic grant resource |
| --- | --- | --- |

DG resource

Transmission of higher
priority data on
configured grant resource

# FIG. 5

FIG. 6

```
┌──────────────────────────────────────┐
│    DETERMINE MODULATION LEVEL FOR      │
│ TRANSMISSION OF LOWER PRIORITY DATA ON │──── S702
│    REMAINING PORTION OF WIRELESS       │
│              RESOURCE                  │
└──────────────────────────────────────┘
                   │
                   ▼
┌──────────────────────────────────────┐
│     DETERMINE TRANSMIT POWER FOR       │
│    TRANSMISSION OF LOWER PRIORITY      │
│     DATA ON REMAINING PORTION OF       │──── S704
│         WIRELESS RESOURCE              │
└──────────────────────────────────────┘
```

# FIG. 7

DEFINE MODULATION LEVEL FOR TRANSMISSION OF LOWER PRIORITY DATA ON REMAINING PORTION OF WIRELESS RESOURCE — S802

DETERMINE SPECTRAL EFFICIENCY FOR TRANSMISSION OF LOWER PRIORITY DATA ON REMAINING PORTION OF WIRELESS RESOURCE — S804

DEFINE PSEUDO MODULATION AND CODING SCHEME (MCS) BASED ON SPECTRAL EFFICIENCY — S806

SET TRANSMISSION POWER FOR TRANSMISSION OF LOWER PRIORITY DATA ON REMAINING PORTION OF WIRELESS RESOURCE BASED ON PSEUDO MCS — S808

# FIG. 8

**FIG. 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011024131 A2
- WO 2018222104 A1